# EUROPÄISCHE PATENTSCHRIFT

(11) **EP 0 797 554 B1**
(45) Veröffentlichungstag und Bekanntmachung des Hinweises auf die Patenterteilung: **05.04.2000**
(21) Anmeldenummer: 95942148.8
(22) Anmeldetag: 13.12.1995
(51) Int. Cl.: C04B 35/117, C04B 35/111, C04B 35/634

(54) **VERFAHREN ZUR HERSTELLUNG EINES ALUMINIUMOXID ENTHALTENDEN GESINTERTEN MATERIALS**
METHOD OF PREPARING A SINTERED MATERIAL CONTAINING ALUMINIUM OXIDE
PROCEDE DE PRODUCTION D'UNE MATIERE FRITTEE COMPORTANT DE L'OXYDE D'ALUMINIUM

(30) Priorität: 14.12.1994 DE 4444597
(43) Veröffentlichungstag der Anmeldung: 01.10.1997
(73) Patentinhaber: C. KLINGSPOR GMBH, 35708 Haiger (DE)
(72) Erfinder: POLLIGKEIT, Wolfgang, D-35746 Herborn (DE); SARTORI, Peter, D-47495 Rheinberg (DE)
(74) Vertreter: Barz, Peter, Dr.
(86) Internationale Anmeldenummer: EP9504936
(87) Internationale Veröffentlichungsnummer: WO9618588

(56) Entgegenhaltungen:
- EP-A- 0 305 759
- EP-A- 0 571 866
- WO-A-93/01146
- WO-A-93/21127
- US-A- 5 196 387
- DATABASE WPI Week 8150 Derwent Publications Ltd., London, GB; AN 81-92003D & JP,A,56 140 065 (KUROSAKI REFRACTORIES KK)

## Beschreibung

Die vorliegende Erfindung betrifft ein Verfahren zur Herstellung eines Aluminiumoxid enthaltenden gesinterten Materials, das sich inbesondere als Schleifmittel bzw. zur Herstellung von Schleifmaterialien eignet.

Aluminiumoxid wird als Korund aufgrund seiner hohen Härte und vergleichsweise niedrigen Herstellungskosten industriell in großen Mengen zu Schleifmitteln verarbeitet. Das am häufigsten verwendete Ausgangsmaterial ist der Schmelzkorund, der aus großen Kristallen besteht, die eine regellose, aber scharfkantige Gestalt besitzen. Daneben gibt es den Sinterkorund, der über Sinterprozesse aus α-Al₂O₃-Pulvern oder Aluminiumoxid-Modifikationen hergestellt wird. Im Unterschied zum Schmelzkorund besitzt der Sinterkorund ein Gefüge, das je nach Qualität der Ausgangspulver, Art und Menge der Zusätze sowie der Sinterbedingungen aus Körnern im Größenbereich von einigen 100 nm bis mehreren 10 µm besteht. Weiter ist bekannt, daß die verschiedenen sinterfähigen Aluminiumoxid-Modifikationen sowie ihre Vorläufermaterialien (Boehmit usw.) für sich alleine zu monolithischen Al₂O₃-Keramiken sintern. Die genauen Sintertemperaturen hängen von der Partikelgröße und der Oberflächenbeschaffenheit ab, ändern aber nichts am prinzipiellen Vorgang der Monolithbildung, d.h. am Korngrößenwachstum. Andererseits ist es für viele Verwendungszwecke wünschenswert, ein zwar möglichst kompaktes, aber doch feinkörniges Material zu erhalten, da sich hierdurch Gebrauchseigenschaften wesentlich beeinflussen lassen. Es ist fernerhin bekannt, daß Zusätze anderer geeigneter Metalloxide, beispielsweise MgO, als Wachstumsinhibitoren für die Al₂O₃-Partikel wirken, aber gleichzeitig die Gebrauchseigenschaften verschlechtern (Spinellbildung). Weiter können feinkörnige (submikron) und dichte Gefüge von Al₂O₃ über den Sol-Gel-Prozeß unter Zuhilfenahme von Nukleierungsmitteln (z.B. Teilchen von α-Al₂O₃, Fe₂O₃, Cr₂O₃ usw.) erhalten werden. Beispielsweise beschreibt die EP-A-571 866 ein nach dem Sol-Gel-Verfahren herstellbares, gesinteres Verbundschleifkorn auf Basis einer α-Al₂O₃-Matrix mit einer Primärkristallitgröße von 0,1 bis 1 µm und mindestens eines Hartstoffes mit einer Korngröße von 1 bis 70 µm.

Eine Aufgabe der vorliegenden Erfindung bestand darin, ein Verfahren zur Herstellung von für Schleifzwecke geeigneten, Aluminiumoxid enthaltenden gesinterten Materialien bereitzustellen, in dem das Kornwachstum des Aluminiumoxids während des Sintervorgangs stark gehemmt wird, das aber dennoch ohne Zugabe bekannter Nukleierungsmittel Sinterkörper mit feinkörnigem Gefüge hoher Dichte und hohen mechanischen Festigkeits- und Zähigkeitswerten liefert.

Diese Aufgabe wird erfindungsgemäß gelöst durch ein Verfahren zur Herstellung eines für Schleifzwecke geeigneten, Aluminiumoxid enthaltenden gesinterten Materials, umfassend die folgenden Stufen:
(a) Herstellung einer homogenen Mischung, umfassend
   (i) mindestens eine sinterfähige Aluminiumoxid-Modifikation mit einer Korngröße von bis zu 20 µm;
   (ii) mindestens eine Verbindung des Siliciums, die bei der thermischen Zersetzung ein Carbid, Nitrid, Oxid, Borid und/oder eine Mischphase derselben von Si liefert; sowie gegebenenfalls
   (iii) einen oder mehrere Vertreter aus der Gruppe der Dispergierhilfsmittel, Formgebungshilfsmittel und Sinterhilfsmittel;
(b) gegebenenfalls Formgebung der trockenen bzw. teilweise oder vollständig getrockneten Mischung von Stufe (a); und
(c) Sintern der trockenen bzw. getrockneten Mischung von Stufe (a) oder des trockenen bzw. getrockneten Formkörpers von Stufe (b);
mit der Maßgabe, daß wenn die in Stufe (a) hergestellte homogene Mischung aus 80,1 bis 97,3 Gew.-% Komponente (i) und 2,7 bis 19,9 Gew.-% Komponente (ii) besteht, Komponente (ii) kein Polysilazan ist, das in einer Atmosphäre aus Stickstoff, Argon und/oder Ammoniak oder unter Druck bei einer Temperatur von 800 bis 1950°C Siliciumcarbid, Siliciumnitrid, Sialon oder eine Mischung derselben bildet. Die letztgenannte Ausführungsform ist in der US-A-5 196 387 beschrieben, die sich mit hochtemperatur- und abriebfester Sinterkeramik befaßt, welche bestimmte Polysilazane als Formgebungshilfsmittel enthält.

Als sinterfähige Aluminiumoxid-Modifikationen können zum Beispiel α-Al₂O₃, γ-Al₂O₃, Boehmit, Pseudoboehmit, Hydrargilit, Bayerit oder Mischungen derselben eingesetzt werden. Der Einsatz von Mischungen, z.B. von α-Al₂O₃ und Boehmit, kann sich in bestimmten Fällen vorteilhaft auf die Eigenschaften des Endprodukts (z.B. Schleifleistung) auswirken. Die sinterfähige Aluminiumoxid-Modifikation kann aber z.B. auch durch ein Sol-Gel-Verfahren hergestellt werden. In einer bevorzugten Ausführungsform des letztgenannten Verfahrens verfährt man beispielsweise so, daß man
(i) eine hydrolysierbare, molekulare (vorzugsweise komplexierte) Aluminium-Verbindung in an sich bekannter Weise einer hydrolytischen Kondensation unter Herstellung eines nanodispersen Sols unterzieht; oder
(ii) eine metastabile, in α-Al₂O₃ umwandelbare Aluminium-Sauerstoffverbindung (z.B. Boehmit) in an sich bekannter Weise in ein nanodisperses Sol überführt; oder
(iii) die gemäß (i) und (ii) erhaltenen Produkte in beliebigem Verhältnis homogen miteinander mischt; oder
(iv) die gemäß (i), (ii) oder (iii) erhaltenen Produkte im Gewichtsverhältnis von 99:1 bis 1:99 auf Feststoffbasis mit handelsüblichem α-Al₂O₃-Sinterpulver mit einer Teilchengröße von > 100 nm homogen mischt;
und das so erhaltene Produkt in üblicher Weise in ein Gel überführt.

Wie bereits oben erwähnt, kann die sinterfähige Aluminiumoxid-Modifikation oberflächenmodifiziert sein, vorzugsweise mit einer organischen Verbindung und insbesondere mit einer ein- oder mehrbasigen aromatischen, cycloaliphatischen oder aliphatischen Carbonsäure mit 2 bis 22 Kohlenstoffatomen. Konkrete Beispiele hierfür sind Propionsäure, Hexansäure, Stearinsäure und Benzoesäure. Bezüglich des Verfahrens der Oberflächenmodifizierung und der dabei einsetzbaren Modifizierungsmittel kann zum Beispiel auf die DE-A-4212633 Bezug genommen werden.

Vorzugsweise liegt die Korngröße der sinterfähigen Aluminiumoxid-Modifikation in der obigen Mischung von Stufe (a) bei nicht mehr als 10 µm, insbesondere nicht mehr als 5 µm. Besonders bevorzugte Korngrößen liegen im Submikron- und nanoskaligen Bereich, z.B. zwischen 0,1 und 1 µm (vorzugsweise 0,3 bis 0,6 µm). Verfahren zur Herstellung derartiger Pulver aus handelsüblichen Materialien sind dem Fachmann bekannt und werden auch in den anschließenden Beispielen veranschaulicht.

Wie oben erwähnt, können die sinterfähigen Aluminiumoxid-Modifikationen auch in Kombination miteinander eingesetzt werden und insbesondere können sie auch von plättchenförmiger Morphologie sein.

Bei der Komponente (ii) der obigen Mischung von Stufe (a) handelt es sich um elementorganische Hartstoffvorläufer, die die Kompositeigenschaften (Gefügeausbildung, Dichte, Härte, Zähigkeit, Kornwachstum usw.) beeinflussen. Diese Vorläufer führen beim Sintern zu einem Hartstoff, der ein Carbid, Oxid, Borid, Nitrid und/oder eine entsprechende Mischphase wie beispielsweise ein Oxycarbid, Oxynitrid, Carbonitrid und/oder Boronitrid von Silicium und gegebenenfalls Ti, Zr, Cr und/oder W ist. Vorzugsweise enthält dieser Hartstoff (zumindest) SiC, gegebenenfalls in Verbindung mit einer oder mehreren davon verschiedenen Silicium-Hartstoffverbindungen. Demgemäß ist es bevorzugt, als Komponente (ii) der Mischung von Stufe (a) mindestens eine Verbindung einzusetzen, die neben Silicium auch Kohlenstoff enthält, z.B. ein Polycarbosilan, Hydridopolycarbosilan, Metallocarbosilan oder Polysilan, insbesondere ein (oligomeres oder polymeres) Polycarbosilan, z.B. ein Phenylgruppen-haltiges Polycarbosilan wie beispielsweise Diphenylpolycarbosilan. Insbesondere ist durch die Verwendung von z.B. Polycarbosilanen die Möglichkeit der zähigkeitserhöhenden in situ-Bildung von nanoskaligen SiC-Partikeln und gegebenenfalls von SiC-Whiskern und die Möglichkeit der Konservierung der ursprünglich vorhandenen Kornmorphologie von ebenfalls zähigkeitserhöhenden Mikro- und Nanoplatelets gegeben.

Im erfindungsgemäßen Verfahren werden als Komponente (ii) Verbindungen eingesetzt, die bei der thermischen Zersetzung andere Verbindungen, vorzugsweise Siliciumcarbid, ergeben, deren Sinter-Endtemperatur noch oberhalb des Schmelzpunktes des Aluminiumoxids liegt. Ihr Zusammenwirken mit der Komponente (i) führt dazu, daß das Kornwachstum des Aluminiumoxids sehr stark gehemmt wird und ohne Zugabe bekannter Nukleierungsmittel doch ein Sinterkörper mit hoher Dichte und hohen mechanischen Festigkeitswerten resultiert. Es wird angenommen, daß die Einlagerung des Hartstoffes (z.B. des Siliciumcarbids) im Nano-Strukturbereich erfolgt und die Aluminiumoxid-Körnungen separiert, dabei aber doch einen festen Zusammenhalt vermittelt. Wahrscheinlich wird dies überwiegend dadurch bewirkt, daß die Hartstoffe bis in die molekulardisperse Verteilung völlig homogen auf die Aluminiumoxid-Matrix aufgebracht werden können. Hierfür sind die speziellen Eigenschaften der Komponente (ii) maßgebend: es handelt sich um (vorzugsweise oligomere bzw. polymere) flüssige und/oder gut in gängigen (organischen) Lösungsmitteln lösliche Silicium-Verbindungen. Diese können z.B. unter Berücksichtigung ihrer Löslichkeit in diesen organischen Lösungsmitteln, ihrer Schwerflüchtigkeit und ihren Zersetzungs- und Keramisierungseigenschaften ausgewählt werden.

In das Molekülgerüst dieser Verbindungen, speziell dasjenige der Polycarbosilane, kann entweder schon bei deren Darstellung oder mit Hilfe nachgeschalteter Umsetzungen ein bestimmter Anteil der erwähnten Heteroelemente in Form von gegebenenfalls Organo-substituierten Baugruppen eingebracht werden.

Diese Heteroelemente liegen nach dem Sintern ebenfalls in völlig homogener Verteilung im gesinterten Produkt vor, wodurch lokale Konzentrationsgradienten vormieden werden. Nach dem gleichen Verfahren können auch Polysilazane als Korngrößen-Modifikatoren eingesetzt werden. Weiter ist es so möglich, durch in situ gebildetes Titan-, Wolfram-, Chrom- oder Zirkoncarbid eine weitere Verstärkung des Endproduktes zu erreichen. Eine Verstärkung des Endproduktes kann auch dadurch erzielt werden, daß Polycarbosilane und andere Materialien in Kombination mit Alkoholaten, Oxiden oder Salzen von Ti, Zr, Cr oder W eingesetzt werden, die mit dem Überschuß-Kohlenstoff der eingesetzten SiC-Vorläufer unter Bildung der entsprechenden Ti-, Zr-, Cr- und W-Carbide reagieren.

Gewünschtenfalls kann in der Komponente (ii) der Kohlenstoffgehalt dadurch erhöht werden, daß man dieser Komponente elementaren Kohlenstoff (vorzugsweise in Form von Ruß, Graphit und dergleichen und vorzugsweise in Mengen nicht über 10 Gewichts-% der Komponente (ii)) einverleibt.

Das Atomverhältnis von Silicium zu Kohlenstoff in der Komponente (ii) beträgt vorzugsweise höchstens 2:1, insbesondere höchstens 1:1. Bei den übrigen oben genannten Heteroatomen der Komponente (ii) beträgt das Atomverhältnis von Silicium zu Heteroatom(en) vorzugsweise nicht weniger als 5:1, bevorzugt nicht weniger als 10:1 und insbesondere nicht weniger als 20:1.

Die in der gegebenenfalls eingesetzten Komponente (iii) der Mischung von Stufe (a) vorhandenen Dispergierhilfsmittel sollen die Dispergierbarkeit der eingesetzten Komponenten verbessern und werden aus herkömmlichen für diesen Zweck bekannten Dispergierhilfsmitteln ausgewählt, z.B. Acrylaten und Fischölen.

Die ebenfalls gegebenenfalls eingesetzten Formgebungshilfsmittel sollen der Erhöhung der Grünfestigkeit der angestrebten Formkörper wie z.B. Schleifkörnung, Wendeschneidplatten usw. dienen. Auch zu diesem Zweck werden herkömmliche Materialien wie zum Beispiel Polyvinylalkohole, Polyalkylenglykole, insbesondere Polyethylenglykole, eingesetzt.

Die in Komponente (iii) gegebenenfalls anwesenden Sinterhilfsmittel beeinflussen insbesondere das Kornwachstum, die Gefügeausbildung und die Sintertemperaturen. Sehr weit verbreitete Sinterhilfsmittel sind MgO und dieses enthaltende Mischoxide (z.B. Spinell). Die Sinteradditive können in Form von Pulvern oder keramischen Vorstufen zugegeben werden, wobei sich im letztgenannten Fall das Sinteradditiv im Verlauf des Calcinierens entwickelt. Erfindungsgemäß kann jedoch auf die Verwendung von Sinterhilfsmitteln verzichtet werden bzw. deren Menge auf ein Minimum reduziert werden.

Was die relativen Mengenverhältnisse der einzelnen Komponenten der Mischung von Stufe (a) anlangt, so liegt die Komponente (i) vorzugsweise in einer Gesamtmenge von mindestens 70 Gewichts-%, insbesondere mindestens 75 Gewichts-% und noch bevorzugter mindestens 80 Gewichts-% des Gesamtgewichts der trockenen bzw. getrockneten Mischung von Stufe (a) vor.

Die Komponente (ii) liegt vorzugsweise in einer Gesamtmenge von höchstens 30 Gewichts-%, vorzugsweise höchstens 25 Gewichts-%, und mindestens 0,25 Gewichts-%, vorzugsweise mindestens 0,5 Gewichts-%, in der trockenen Mischung von Stufe (a) vor.

Unter "trockener bzw. getrockneter Mischung von Stufe (a)" wird eine Mischung verstanden, die entweder bereits aus Feststoffen hergestellt wurde oder aus der die gegebenenfalls bei ihrer Herstellung verwendeten oder gebildeten flüchtigen Bestandteile (z.B. Lösungs- oder Dispergiermittel, flüchtige Reaktionsprodukte usw.) in geeigneter Weise (z.B. durch Destillation) entfernt wurden.

Wünscht man einen möglichst feinkörnigen Aluminiumoxid-Sinterkörper, wird man zweckmäßigerweise nur relativ geringe Mengen an Komponente (ii) einsetzen, insbesondere solche Mengen, die zu einem Anteil von vorzugsweise 0,2 bis 2 Gewichts-% an im Sinterkörper verbleibendem Material aus Komponente (ii) führen. Entsprechend werden in diesem Fall auch möglichst geringe Mengen an anderen Zusätzen eingesetzt. Soll hingegen eine strukturverstärkende Wirkung erreicht werden, ist es zweckmäßig, die Gesamtmenge an Komponente (ii) so zu wählen, daß im gesinterten Endprodukt bezogen auf das Aluminiumoxid vorzugsweise 2 bis 20 Gewichts-% Material verbleiben, das auf die Komponente (ii) zurückzuführen ist.

Die Formgebungshilfsmittel und/oder Dispergierhilfsmittel werden in der trockenen bzw. getrockneten Mischung von Stufe (a) vorzugsweise in einer Menge von 0,05 bis 10 Gewichts-%, insbesondere 0,1 bis 5 Gewichts-%, eingesetzt. Werden Sinterhilfsmittel eingesetzt, liegt deren Anteil in der trockenen bzw. getrockneten Mischung von Stufe (a) vorzugsweise bei 0,001 bis 15 Gewichts-%, insbesondere 0,01 bis 10 Gewichts-%, besonders bevorzugt 0,1 bis 5 Gewichts-% (z.B. 0,5 bis 2 Gewichts-%).

Weiter ist es bevorzugt, daß in der trockenen bzw. getrockneten Mischung von Stufe (a) die Gesamtmenge an Komponente (iii) 15 Gewichts-%, insbesondere 10 Gewichts-%, und besonders bevorzugt 5 Gewichts-%, nicht übersteigt.

Bei der Herstellung einer homogenen Mischung in Stufe (a) geht man zum Beispiel so vor, daß man die feinteiligen Komponenten (i) und (iii) möglichst innig vermischt. Vorzugsweise werden diese Komponenten durch Copräzipitation der entsprechenden Materialien oder durch gemeinsame Fällung im Sol-Gel-Verfahren homogen miteinander vermischt. Vorzugsweise wird die so vorbereitete Vormischung dann mit der Komponente (ii) homogen in der Weise gemischt, daß die Komponente (ii) in einer Lösung (oder auch in einer Emulsion oder Suspension) in einem organischen Lösungsmittel (z.B. Toluol, Methylenchlorid oder Diethylether), der vorzugsweise ein Emulgator wie z.B. ein handelsübliches (nicht-ionisches) Tensid zugesetzt wurde, mit der Vormischung kombiniert wird. Die Komponente (ii) kann aber gegebenenfalls auch in geschmolzener flüssiger Form eingesetzt werden. Die gegebenenfalls erhaltene Aufschlämmung kann dann durch ein geeignetes Trocknungsverfahren (z.B. Rotationsverdampfung, Sprühtrocknung oder einfaches Abdestillieren oder Abdunsten des Lösungsmittels) unter Rückgewinnung von eingesetzten Lösungsmitteln als Trockenmaterial gewonnen werden. Das völlig getrocknete, aber auch das nur teilweise getrocknete Material kann dann in der fakultativen Stufe (b) einem Formgebungsverfahren unterzogen werden, das entweder bereits zu einem für den Anwendungszweck geeigneten Formkörper mit definierter Geometrie führt oder das Material nur so weit verfestigt, daß es für die weiteren Behandlungsschritte brauchbar ist. Der durch Trocknung (z.B. normale Ofentrocknung (bevorzugt), Mikrowellentrocknung), Pressen (vorzugsweise kaltisostatisches (KIP) oder heißisostatisches (HIP) Pressen) und andere Formgebungsverfahren (insbesondere Extrusion mit oder ohne Vakuumentgasung) erhaltene Grünkörper kann anschließend, vorzugsweise unter Schutzgas (z.B. Argon, Stickstoff) oder einer anderen geeigneten Atmosphäre, durch eine (kontrollierte) Temperaturbehandlung in an sich bekannter Weise in das gesinterte Endprodukt überführt werden (Stufe (c)) . Dabei treten zunächst thermische Umwandlungsreaktionen, Kondensationen und Zersetzungsreaktionen auf, die zur Bildung flüchtiger Reaktionsprodukte führen, die mit dem Schutzgas abgeführt werden (oder durch Anlegen von Vakuum entfernt werden) können.

Anschließend sintert der Grünkörper und erreicht dann nahezu die maximal erreichbare Dichte. Die Sintertemperatur in Stufe (c) des erfindungsgemäßen Verfahrens liegt üblicherweise bei 1200 bis 1750°C, vorzugsweise 1300 bis 1700°C, und insbesondere 1400 bis 1650°C. Im allgemeinen wird mit einer Aufheizrate von etwa 2°C pro Minute und einer Haltezeit von etwa 3 Stunden bei der Maximaltemperatur gearbeitet. Daran schließt sich eine kontrollierte Abkühlung mit etwa der gleichen Geschwindigkeit wie in der Aufheizphase an.

Gemäß einer weiteren, bevorzugten Ausführungsform des erfindungsgemäßen Verfahrens kann die Komponente (ii) auch in Form eines Grünkörper-Materials aus einem vorangegangenen Ansatz eingesetzt werden. Insbesondere wird üblicherweise das vor der Sinterstufe anfallende Material, das die Komponenten (i) und (ii) sowie gegebenenfalls (iii) umfaßt, durch Brechen und Fraktionieren auf die gewünschte Kornverteilung eingestellt. Bei dieser Fraktionierung fällt ein sogenannter Feinanteil an, der jedoch nicht verworfen werden muß, sondern zur Einbringung eines Teils der Komponente (ii) oder der gesamten Komponente (ii) in die Mischung von Stufe (a) verwendet werden kann. Diese feinteiligen Zusätze (maximale Korngröße vorzugsweise 500 µm, insbesondere 300 µm und besonders bevorzugt 250 µm) bewirken ähnlich wie die reine Komponente (ii) ein gemindertes Kornwachstum in der Matrix während des Sinterns bei gleichzeitiger Einführung definierter Fehlstellen in die Matrix. In der Regel tragen diese Wirkungsweisen in der Summe zu einer deutlichen Verbesserung der Schleifleistung der Endprodukte bei.

Das erfindungsgemäße Verfahren liefert Sinterkörper mit mikrokristallinem Gefüge - vorzugsweise mit Korngrößen von 0,05 bis 5 µm - und mit verbesserten Gebrauchseigenschaften hinsichtlich Härte (> 1600 GPa) und Zähigkeit, die sich insbesondere für Schleifzwecke bzw. die Herstellung von Schleifmaterialien eignen.

Die folgenden Beispiele dienen der weiteren Erläuterung der Erfindung, ohne deren Umfang jedoch zu beschränken. Für diese Beispiele gilt allgemein folgendes:

Das verwendete "Martoxid^{(R)}CS 400 M" der Firma Martinswerke ist ein überwiegend aus α-Al₂O₃ bestehendes Aluminiumoxid mit einem 0,1 Gew.-%igen Zusatz von MgO. Herstellungsbedingt liegt es in Form von Hohlkugel-Agglomeraten aus Primärkörnern vor, deren Durchmesser ≥ 5 µm beträgt. Eine Änderung der Oberflächenladung der Agglomerate führt zu einem Zerfall der Hohlkugeln in Primärteilchen (≈ 1 µm) und erlaubt so die Gewinnung dichterer Grünkörper. Dieses Modifizierungsverfahren wird im folgenden als Desagglomeration bezeichnet.

Das eingesetzte "Disperal^{(R)}" der Firma Condea besteht überwiegend aus AlO(OH)xH₂O (Böhmit-Form) und wird durch die im weiteren näher beschriebene Modifizierung in ein wäßriges Sol überführt. Dieses Sol kann durch eine anschließende Gelierung in ein Gel überführt werden, dessen Viskosität das Einbringen des Poly(carbosilan) -haltigen Zusatzes erlaubt und insbesondere auch eine homogene Verteilung des Zusatzes in der Böhmit-Matrix ermöglicht. Die anschließende Trocknung führt zu einem Gelpulver, aus dem durch Brechen und Fraktionieren die gewünschte Kornverteilung hergestellt wird. Bei der Fraktionierung fällt der sogenannte Feinanteil (Korngröße < 210 µm) an, der nicht verworfen werden muß, sondern als weiterer Zusatz in ein Böhmit-Gel bzw. in eine CS 400 M-Matrix eingebracht werden kann.

Der verwendete Emulgator war Arkopal^{(R)} N040 (Hoechst) d.h., ein Nonylphenolpolyglykolether. Die zugesetzte Menge betrug bei Ansätzen mit Böhmit 1 bis 12 Gew.-% (bevorzugt 3 bis 5 Gew.-%) bezogen auf den Al₂O₃-Gehalt. Bei Ansätzen mit α-Al₂O₃ variierte der Zusatz zwischen 2 und 10 Gew.-%.

Als Lösungsmittel für das verwendete Poly(carbosilan) (Poly(diphenylsilylen-co-methylen), im folgenden mit "PCS" abgekürzt) wurde Toluol gewählt. Der Zusatz an Toluol betrug bei den Böhmit-Ansätzen 2 bis 24 Gew.-% (bevorzugt 6 bis 10 Gew.-%) bezogen auf den Al₂O₃-Gehalt, während er bei den Versuchen mit desagglomeriertem CS 400 M mit 3 bis 15 Gew.-% bezogen auf den Al₂O₃-Gehalt einging.

### Beispiel 1 (Vergleich)

### Darstellung von Disperal SG-Pulver

1000 g Disperal (Böhmit) wurden in 3000 g deionisiertes Wasser eingebracht und mit 100 g Propionsäure (Oberflächenmodifizierungsmittel) versetzt. Die Suspension wurde acht Stunden lang unter Rückfluß erhitzt und gerührt.

960 ml des so gewonnen Sols wurden in einem Mischer (Planetenmischverfahren) mit 8 ml einer 25%igen Ammoniaklösung versetzt und unter ständigem, langsamem Mischen vergelt.

Das homogene farblose Gel wurde in einer Schichtdicke von 2 cm auf Glasplatten aufgetragen, 24 Stunden bei Raumtemperatur und anschließend weitere 24 Stunden bei 80 bis 100°C an der Luft getrocknet.

### Beispiel 2

### Darstellung von Disperal SG-Pulver mit PCS-Zusatz

PCS wurde in Toluol gelöst und die resultierende, mit Emulgator versetzte Lösung wurde unter das Disperal-Gel gemischt. Die Herstellung des Sols und des Gels erfolgte wie unter Beispiel 1 beschrieben.

Die Ansatzverhältnisse sind folgender Tabelle zu entnehmen:

| Ansatz Nr. | Zusatz (Gew.-%) | PCS g | Emulgator g | Toluol g |
|---|---|---|---|---|
| 1 | 1 | 2 | 2 | 4 |
| 2 | 3 | 6 | 6 | 12 |
| 3 | 5 | 10 | 10 | 20 |
| 4 | 10 | 20 | 20 | 40 |
| 5 | 12 | 24 | 24 | 48 |

Die Trocknung der Gele erfolgte wie in Beispiel 1 beschrieben.

### Beispiel 3 (Vergleich)

### Desagglomeration von CS 400 M

1000 g CS 400 M wurde in 515 ml deionisiertem Wasser suspendiert und unter Rühren mit 10 g (1,0 Gew.-%) Zitronensäure versetzt (Feststoffgehalt 66%). Die so gewonnene Suspension wurde in einer Schichtdicke von 2 bis 5 cm auf Glasplatten ausgestrichen. Die Trocknung des Grünmaterials erfolgte zunächst für 24 Stunden bei Raumtemperatur und anschließend bei 80 bis 100°C an der Luft.

### Beispiel 4

### Darstellung von desagglomeriertem CS 400 M mit PCS-Zusatz

PCS wurde in Toluol gelöst und die resultierende Lösung wurde mit Emulgator versetzt. Das Gemisch wurde in die unter Beispiel 3 beschriebene Suspension eingebracht und anschließend mit Hilfe eines Mischers (Planetenmischverfahren) oder Disolvers homogenisiert. Daran schloß sich die Trocknung analog zu Beispiel 3 an.

Die Ansatzverhältnisse sind der folgenden Tabelle zu entnehmen:

| Ansatz Nr. | Zusatz (Gew.-%) | PCS g | Emulgator g | Toluol g |
|---|---|---|---|---|
| 1 | 1 | 10 | 20 | 30 |
| 2 | 3 | 30 | 60 | 90 |
| 3 | 5 | 50 | 100 | 150 |

### Beispiel 5 (Vergleich)

### Darstellung von CS 400 M/Disperal SG-Gemischen

Eine nach Beispiel 3 hergestellte CS 400 M-Suspension wurde mit Disperal SG Gelpulver versetzt, das Gemisch homogenisiert und anschließend getrocknet.

Die folgende Tabelle gibt die Ansatzverhältnisse wieder:

| Gew.-Verhältnisse | Ansatzmengen/g | |
|---|---|---|
| CS 400 M zu Disperal SG | CS 400 M | Disperal SG |
| 90:10 | 900 | 100 |
| 50:50 | 500 | 500 |
| 10:90 | 100 | 900 |

### Beispiel 6

### Darstellung von CS 400 M/Disperal SG-Gemischen mit PCS

Die Darstellung erfolgte analog zu Beispiel 5, jedoch unter Verwendung eines Gelpulvers mit 3%igem Zusatz an PCS, hergestellt wie in Beispiel 2.

Die folgende Tabelle gibt die Ansatzverhältnisse wieder:

| Gew.-Verhältnisse | Ansatzmengen/g | |
|---|---|---|
| CS 400 M zu Disperal SG 3% PCS | CS 400 M | Disperal SG 3% PCS |
| 90:10 | 900 | 100 |
| 50:50 | 500 | 500 |
| 10:90 | 100 | 900 |

### Beispiel 7

### Darstellung von CS 400 M/Disperal SG FA-Gemischen mit PCS-Zusatz

Die Darstellung erfolgte analog zu Beispiel 5, jedoch unter Verwendung eines Disperal-Gelpulvers mit 3 Gew.-%igem Zusatz an PCS, hergestellt wie in Beispiel 2, mit einer maximalen Teilchengröße von <210 µm (FA = Feinanteil).

Die folgende Tabelle gibt die Ansatzverhältnisse wieder:

| Gew.-Verhältnisse | Ansatzmengen/g | |
|---|---|---|
| CS 400 M zu Disperal SG FA 3% PCS | CS 400 M | Disperal SG FA 3% PCS |
| 90:10 | 900 | 100 |
| 50:50 | 500 | 500 |
| 10:90 | 100 | 900 |

### Beispiel 8 (Vergleich)

### Extrusionsversuche mit CS 400 M/Disperal SG-Pulvergemischen

Das CS 400 M-Pulver, hergestellt nach Beispiel 3, wurde im Kneter mit Disperal SG-Gelpulver (Beispiel 1) versetzt und mit deionisiertem Wasser angeschwämmt. Das Gemisch wurde mit 10 g Methylcellulose versetzt und im Kolbenextruder verdichtet.

Das gewonnene Material wurde 24 Stunden bei Raumtemperatur und anschließend weitere 24 Stunden bei 80 bis 100°C getrocknet.

Die folgende Tabelle gibt die Ansatzverhältnisse wieder:

| Gew.-Verhältnisse | Ansatzmengen/g | |
|---|---|---|
| CS 400 M zu Disperal SG | CS 400 M | Disperal SG |
| 90:10 | 180 | 20 |
| 50:50 | 100 | 100 |
| 10:90 | 20 | 180 |

### Beispiel 9

### Extrusionsversuche mit Pulvergemischen von CS 400 M und Disperal SG mit PCS-Zusatz

Die Darstellung erfolgte analog zu Beispiel 8, jedoch unter Verwendung eines Gelpulvers mit 3 Gew.-%igem Zusatz an PCS, hergestellt wie in Beispiel 2.

Die folgende Tabelle gibt die Ansatzverhältnisse wieder:

| Gew.-Verhältnisse | Ansatzmengen/g | |
|---|---|---|
| CS 400 M zu Disperal SG 3% PCS | CS 400 M | Disperal SG 3% PCS |
| 90:10 | 180 | 20 |
| 10:10 | 100 | 100 |
| 10:90 | 20 | 180 |

### Beispiel 10

### Extrusionsversuche mit Pulvergemischen von CS 400 M und Disperal SG FA mit PCS-Zusatz

Die Darstellung erfolgte analog zu Beispiel 9, jedoch unter Verwendung eines Disperal-Gelpulvers mit 3 Gew.-%igem Zusatz an PCS, hergestellt wie in Beispiel 2, mit einer maximalen Teilchengröße von <210 µm (FA = Feinanteil).

Die folgende Tabelle gibt die Ansatzverhältnisse wieder:

| Gew.-Verhältnisse | Ansatzmengen/g | |
|---|---|---|
| CS 400 M zu Disperal SG FA 3% PCS | CS 400 M | Disperal SG FA 3% PCS |
| 90:10 | 180 | 20 |
| 50:50 | 100 | 100 |
| 10:90 | 20 | 180 |

### Beispiel 11

### Pyrolyse der Grünmaterialien

Die nach Beispiel 1 bis 10 gewonnenen Grünmaterialien wurden zu einem Pulver zerkleinert und dieses zu einer definierten Kornverteilung fraktioniert. Die anschließende Sinterung bei 1450°C bzw. bei 1650°C mit einer Haltezeit von drei Stunden und einer Aufheizrate von 2°C pro Minute führte zu Körnern mit definierter Kornverteilung.

Die erhaltenen Körner wurden einem Schleiftest unterzogen, wobei die Schleifleistung jeweils in Bezug auf das entsprechende Material ohne PCS-Zusatz (Nullprobe) ermittelt wurde.

Die erhaltenen Ergebnisse zeigten, daß die erfindungsgemäß hergestellten Materialien eine um den Faktor 1,2 bis 18 bessere Schleifleistung aufwiesen als die jeweilige Nullprobe.

## Patentansprüche

1. Verfahren zur Herstellung eines für Schleifzwecke geeigneten, Aluminiumoxid enthaltenden gesinterten Materials, umfassend die folgenden Stufen:
(a) Herstellung einer homogenen Mischung, umfassend
(i) mindestens eine sinterfähige Aluminiumoxid-Modifikation mit einer Korngröße von bis zu 20 µm;
(ii) mindestens eine Verbindung des Siliciums, die bei der thermischen Zersetzung ein Carbid, Nitrid, Oxid, Borid und/oder eine Mischphase derselben von Si liefert; sowie gegebenenfalls
(iii) einen oder mehrere Vertreter aus der Gruppe der Dispergierhilfsmittel, Formgebungshilfsmittel und Sinterhilfsmittel;
(b) gegebenenfalls Formgebung der trockenen bzw. teilweise oder vollständig getrockneten Mischung von Stufe (a); und
(c) Sintern der trockenen bzw. getrockneten Mischung von Stufe (a) oder des trockenen bzw. getrockneten Formkörpers von Stufe (b);
mit der Maßgabe, daß wenn die in Stufe (a) hergestellte homogene Mischung aus 80,1 bis 97,3 Gew.-% Komponente (i) und 2,7 bis 19,9 Gew.-% Komponente (ii) besteht, Komponente (ii) kein Polysilazan ist, das in einer Atmosphäre aus Stickstoff, Argon und/oder Ammoniak oder unter Druck bei einer Temperatur von 800 bis 1950°C Siliciumcarbid, Siliciumnitrid, Sialon oder eine Mischung derselben bildet.

2. Verfahren nach Anspruch 1, dadurch gekennzeichnet, daß es sich bei der sinterfähigen Aluminiumoxid-Modifikation um α-Al₂O₃, γ-Al₂O₃, Boehmit, Pseudoboehmit, Hydrargilit, Bayerit oder Mischungen derselben handelt und/oder diese durch das Sol-Gel-Verfahren hergestellt wurde.

3. Verfahren nach irgendeinem der Ansprüche 1 und 2, dadurch gekennzeichnet, daß die sinterfähige Aluminiumoxid-Modifikation oberflächenmodifiziert ist, vorzugsweise mit einer Carbonsäure.

4. Verfahren nach irgendeinem der Ansprüche 1 bis 3, dadurch gekennzeichnet, daß die Korngröße der Aluminiumoxid-Modifikation nicht mehr als 10 µm, insbesondere nicht mehr als 5 µm, beträgt.

5. Verfahren nach irgendeinem der Ansprüche 1 bis 4, dadurch gekennzeichnet, daß es sich bei der Komponente (ii) um mindestens eine Verbindung von Si mit mindestens einem Element aus der Gruppe C, N, O, B, und gegebenenfalls mindestens einem Element aus der Gruppe Ti, Zr, Cr und W, vorzugsweise in Form eines Polycarbosilans, Hydridopolycarbosilans, Metallocarbosilans, Polysilans, Polyborosiloxans, Polyamidocarbosilans, Polysilazans und/oder Polyborosilazans, handelt.

6. Verfahren nach irgendeinem der Ansprüche 1 bis 5, dadurch gekennzeichnet, daß die Komponente (ii) mindestens Si und C enthält und vorzugsweise mindestens ein Polycarbosilan, insbesondere ein Polyphenylcarbosilan, umfaßt und/oder die Mischung von Stufe (a) zusätzlich elementaren Kohlenstoff, vorzugsweise in Form von Graphit, enthält.

7. Verfahren nach irgendeinem der Ansprüche 1 bis 6, dadurch gekennzeichnet, daß das Dispergierhilfsmittel aus Acrylaten, Fischölen und Mischungen davon ausgewählt wird.

8. Verfahren nach irgendeinem der Ansprüche 1 bis 7, dadurch gekennzeichnet, daß das Formgebungshilfsmittel aus Polyvinylalkoholen, Polyalkylenglykolen und Mischungen davon ausgewählt wird.

9. Verfahren nach irgendeinem der Ansprüche 1 bis 8, dadurch gekennzeichnet, daß das Sinterhilfsmittel aus MgO, Mg enthaltenden Mischoxiden und Mischungen davon ausgewählt wird.

10. Verfahren nach irgendeinem der Ansprüche 1 bis 9, dadurch gekennzeichnet, daß die Komponente (i) in einer Gesamtmenge von mindestens 70 Gewichts-%, vorzugsweise mindestens 80 Gewichts-%, in der trockenen bzw. getrockneten Mischung von Stufe (a) enthalten ist.

11. Verfahren nach irgendeinem der Ansprüche 1 bis 10, dadurch gekennzeichnet, daß die Komponente (ii) in einer Gesamtmenge von höchstens 30 Gewichts-%, vorzugsweise höchstens 25 Gewichts-%, und mindestens 0,25 Gewichts%, vorzugsweise mindestens 0,5 Gewichts-%, in der trockenen bzw. getrockneten Mischung von Stufe (a) enthalten ist.

12. Verfahren nach irgendeinem der Ansprüche 1 bis 11, dadurch gekennzeichnet, daß die Gesamtmenge an Formgebungshilfsmittel und/oder Dispergierhilfsmittel in der trockenen bzw. getrockneten Mischung von Stufe (a) 0,05 bis 10 Gewichts-%, vorzugsweise 0,1 bis 5 Gewichts-%, beträgt.

13. Verfahren nach irgendeinem der Ansprüche 1 bis 12, dadurch gekennzeichnet, daß die Gesamtmenge an Sinterhilfsmittel in der trockenen bzw. getrockneten Mischung von Stufe (a) 0,001 bis 15 Gewichts-%, vorzugsweise 0,1 bis 5 Gewichts-%, beträgt.

14. Verfahren nach irgendeinem der Ansprüche 1 bis 13, dadurch gekennzeichnet, daß die Gesamtmenge an Komponente (iii) nicht mehr als 15 Gewichts-%, vorzugsweise nicht mehr als 10 Gewichts-%, der trockenen bzw. getrockneten Mischung von Stufe (a) ausmacht.

15. Verfahren nach irgendeinem der Ansprüche 1 bis 14, dadurch gekennzeichnet, daß die Komponente (ii) in Form eines aus einem vorangegangenen Ansatz erhaltenen Produkts von Stufe (a), das in trockener, feinteiliger Form vorliegt, eingesetzt wird.

16. Verfahren nach Anspruch 15, dadurch gekennzeichnet, daß das feinteilige Produkt von Stufe (a) eine maximale Teilchengröße von 500 µm, vorzugsweise von 300 µm und insbesondere von 250 µm aufweist.

17. Verfahren nach irgendeinem der Ansprüche 1 bis 16, dadurch gekennzeichnet, daß die maximale Sintertemperatur in Stufe (c) 1200 bis 1750°C, vorzugsweise 1400 bis 1650°C, beträgt.

18. Verfahren nach irgendeinem der Ansprüche 1 bis 17, dadurch gekennzeichnet, daß das erhaltene gesinterte Material zu Schleifmitteln, vorzugsweise Schleifscheiben oder Schleifblättern, verarbeitet wird.

## Claims

1. Process for the manufacture of alumina containing sintered material suitable for abrasive purposes, comprising the following steps:
(a) preparation of a homogeneous mixture comprising
(i) at least one sinterable alumina modification having a grain size of up to 20 µm;
(ii) at least one silicon compound which upon thermal decomposition affords a carbide, nitride, oxide, boride and/or a mixed phase thereof of Si; as well as optionally
(iii) one or more members selected from the group of dispersion aids, molding aids and sintering aids;
(b) optionally molding of the dry and partially or completely dried, respectively mixture of step (a), and
(c) sintering the dry or dried, respectively mixture of step (a) or the dry or dried, respectively molded body of step (b);
provided that if the homogeneous mixture prepared in step (a) consists of 80.1 to 97.3% by wt. of component (i) and 2.7 to 19.9% by wt. of component (ii), component (ii) is not a polysilazane which in an atmosphere of nitrogen, argon and/or ammonia, or under pressure at a temperature of 800 to 1950°C, forms silicon carbide, silicon nitride, sialon or a mixture thereof.

2. Process according to claim 1, characterized in that said sinterable alumina modification is α-Al₂O₃, γ-Al₂O₃, boehmite, pseudo boehmite, hydrargilite, bayerite or mixtures thereof and/or has been prepared by the sol-gel process.

3. Process according to any one of claims 1 and 2, characterized in that said sinterable alumina modification is surface-modified, preferably with a carboxylic acid.

4. Process according to any one of claims 1 to 3, characterized in that the grain size of said alumina modification is not higher than 10 µm, particularly not higher than 5 µm.

5. Process according to any one of claims 1 to 4, characterized in that said component (ii) is at least one compound of Si with at least one element from the group C, N, O, B and optionally at least one element from the group Ti, Zr, Cr and W, preferably in the form of a polycarbosilane, hydridopolycarbosilane, metallocarbosilane, polysilane, polyborosiloxane, polyamidocarbosilane, polysilazane and/or polyborosilazane.

6. Process according to any one of claims 1 to 5, characterized in that said component (ii) contains at least Si and C, and preferably comprises at least one polycarbosilane, particularly a polyphenylcarbosilane, and/or said mixture of step (a) additionally contains elemental carbon, preferably in the form of graphite.

7. Process according to any one of claims 1 to 6, characterized in that said dispersion aid is selected from acrylates, fish oils, and mixtures thereof.

8. Process according to any one of claims 1 to 7, characterized in that said molding aid is selected from polyvinylalcohols, polyalkyleneglycols, and mixtures thereof.

9. Process according to any one of claims 1 to 8, characterized in that said sintering aid is selected from MgO, mixed oxides containing Mg, and mixtures thereof.

10. Process according to any one of claims 1 to 9, characterized in that said component (i) is contained in said dry or dried, respectively mixture of step (a) in a total amount of at least 70% by wt, preferably at least 80% by wt.

11. Process according to any one of claims 1 to 10, characterized in that said component (ii) is contained in said dry or dried, respectively mixture of step (a) in a total amount of at the most 30% by wt., preferably at the most 25% by wt., and at least 0.25% by wt., preferably at least 0.5% by wt.

12. Process according to any one of claims 1 to 11, characterized in that the total amount of molding aid and/or dispersion aid in said dry or dried, respectively mixture of step (a) is 0.05 to 10% by wt., preferably 0.1 to 5% by wt.

13. Process according to any one of claims 1 to 12, characterized in that the total amount of sintering aid in said dry or dried, respectively mixture of step (a) is 0.001 to 15% by wt., preferably 0.1 to 5% by wt.

14. Process according to any one of claims 1 to 13, characterized in that the total amount of component (iii) does not account for more than 15% by wt., preferably not more than 10% by wt., of said dry or dried, respectively mixture of step (a).

15. Process according to any one of claims 1 to 14, characterized in that said component (ii) is employed in the form of a product of step (a) which has been obtained from a preceding run and is present in the form of dry, fine particles.

16. Process according to claim 15, characterized in that said fine particle product of step (a) has a maximum particle size of 500 µm, preferably 300 µm, and particularly 250 µm.

17. Process according to any one of claims 1 to 16, characterized in that the maximum sintering temperature in step (c) is 1200 to 1750°C, preferably 1400 to 1650°C.

18. Process according to any one of claims 1 to 17, characterized in that the obtained sintered material is further processed to form abrasives, preferably abrasive disks or abrasive blades.

## Revendications

1. Procédé de fabrication d'un matériau fritté contenant de l'oxyde d'aluminium et approprié pour des applications d'abrasion, lequel procédé comporte les étapes suivantes :
a) préparer un mélange homogène comprenant
i) au moins une variété d'oxyde d'aluminium apte au frittage, en particules d'une taille valant jusqu'à 20 µm,
ii) au moins un composé du silicium qui donne, par décomposition thermique, un carbure, nitrure, oxyde ou borure de silicium et/ou une phase mixte de ces composés,
et le cas échéant,
iii) un ou plusieurs représentants du groupe des auxiliaires de dispersion, auxiliaires de façonnage et auxiliaires de frittage ;
b) éventuellement, façonner le mélange sec, ou bien partiellement ou totalement séché, issu de l'étape (a) ; et
c) fritter le mélange sec ou séché issu de l'étape (a), ou bien la pièce façonnée sèche ou séchée, issue de l'étape (b);
sous réserve que, si le mélange homogène préparé dans l'étape (a) est constitué de 80,1 à 97,3 % en poids de composant (i) et de 2,7 à 19,9 % en poids de composant (ii), ce composant (ii) ne soit pas un polysilazane qui, placé dans une atmosphère d'azote, d'argon et/ou d'ammoniac ou sous pression à une température de 800 à 1950 °C, donne du carbure de silicium, du nitrure de silicium, du sialon ou un mélange de ces composés.

2. Procédé conforme à la revendication 1, caractérisé en ce que la variété d'oxyde d'aluminium apte au frittage est de l'alumine-α, de l'alumine-γ, de la boehmite, de la pseudoboehmite, de l'hydrargillite, de la bayérite ou un mélange de celles-ci, et/ou en ce qu'on l'a préparée selon un procédé sol-gel.

3. Procédé conforme à l'une des revendications 1 et 2, caractérisé en ce que la variété d'oxyde d'aluminium apte au frittage est modifiée en surface, de préférence avec un acide carboxylique.

4. Procédé conforme à l'une des revendications 1 à 3, caractérisé en ce que la taille des particules de la variété d'oxyde d'aluminium ne vaut pas plus de 10 µm, et en particulier, ne dépasse pas 5 µm.

5. Procédé conforme à l'une des revendications 1 à 4, caractérisé en ce que le composant (ii) est au moins un composé du silicium et d'au moins un élément de l'ensemble formé par le carbone, l'azote, l'oxygène et le bore, et le cas échéant, d'au moins un élément de l'ensemble constitué par le titane, le zirconium, le chrome et le tungstène, lequel composé se présente de préférence sous la forme d'un polycarbosilane, d'un hydruropolycarbosilane, d'un métallocarbosilane, d'un polysilane, d'un polyborosiloxane, d'un polyamidocarbosilane, d'un polysilazane et/ou d'un polyborosilazane.

6. Procédé conforme à l'une des revendications 1 à 5, caractérisé en ce que le composant (ii) contient au moins du silicium et du carbone et comporte de préférence au moins un polycarbosilane, en particulier un polyphénylcarbosilane, et/ou en ce que le mélange issu de l'étape (a) contient en plus du carbone élémentaire, de préférence sous forme de graphite.

7. Procédé conforme à l'une des revendications 1 à 6, caractérisé en ce que l'auxiliaire de dispersion est choisi parmi les acrylates, les huiles de poisson et leurs mélanges.

8. Procédé conforme à l'une des revendications 1 à 7, caractérisé en ce que l'auxiliaire de façonnage est choisi parmi les poly(alcool vinylique), les polyalkylèneglycols et leurs mélanges.

9. Procédé conforme à l'une des revendications 1 à 8, caractérisé en ce que l'auxiliaire de frittage est choisi parmi l'oxyde de magnésium, les oxydes mixtes contenant du magnésium et leurs mélanges.

10. Procédé conforme à l'une des revendications 1 à 9, caractérisé en ce que la proportion pondérale totale de composant (i) contenu dans le mélange sec ou séché issu de l'étape (a) vaut au moins 70 % et de préférence au moins 80 %.

11. Procédé conforme à l'une des revendications 1 à 10, caractérisé en ce que la proportion pondérale totale de composant (ii) contenu dans le mélange sec ou séché issu de l'étape (a) vaut au plus 30 % et de préférence au plus 25 %, mais au moins 0,25 % et de préférence au moins 0,5 %.

12. Procédé conforme à l'une des revendications 1 à 11, caractérisé en ce que la proportion pondérale totale d'adjuvants de façonnage et/ou d'adjuvants de dispersion contenus dans le mélange sec ou séché issu de l'étape (a) vaut de 0,05 à 10 %, et de préférence de 0,1 à 5 %.

13. Procédé conforme à l'une des revendications 1 à 12, caractérisé en ce que la proportion pondérale totale d'adjuvants de frittage contenus dans le mélange sec ou séché issu de l'étape (a) vaut de 0,001 à 15 %, et de préférence de 0,1 à 5 %.

14. Procédé conforme à l'une des revendications 1 à 13, caractérisé en ce que la quantité totale de composants (iii) ne représente pas plus de 15 %, et de préférence pas plus de 10 %, du poids du mélange sec ou séché issu de l'étape (a).

15. Procédé conforme à l'une des revendications 1 à 14, caractérisé en ce que le composant (ii) est introduit sous la forme d'un produit de l'étape (a), provenant d'un lot précédent, qui se présente sous forme séchée et finement divisée.

16. Procédé conforme à la revendication 15, caractérisé en ce que la taille des particules du produit finement divisé de l'étape (a) vaut au maximum 500 µm, de préférence 300 µm, et en particulier 250 µm.

17. Procédé conforme à l'une des revendications 1 à 16, caractérisé en ce que la température maximale de frittage atteinte au cours de l'étape (c) vaut de 1200 à 1750 °C, et de préférence de 1400 à 1650 °C.

18. Procédé conforme à l'une des revendications 1 à 17, caractérisé en ce que le matériau fritté obtenu est mis en oeuvre dans des outils abrasifs, de préférence des meules abrasives ou des feuilles abrasives.
